# EUROPEAN PATENT SPECIFICATION

(11) **EP 1 131 925 B1**
(45) Date of publication and mention of the grant of the patent: **30.09.2009**
(21) Application number: 99972814.0
(22) Date of filing: 17.11.1999
(51) Int. Cl.: H04L 12/58, H04M 3/533

(54) **MESSAGING PLATFORM**
NACHRICHTENSYSTEM
PLATE-FORME DE MESSAGERIE

(30) Priority: 25.11.1998 EP 98309679
(43) Date of publication of application: 12.09.2001
(73) Proprietor: BRITISH TELECOMMUNICATIONS public limited company, London EC1A 7AJ (GB)
(72) Inventor: BALE, Melvyn Christopher, Ipswich, Suffolk IP4 3NB (GB); HENDERSON, Gordon, Kesgrave, Suffolk IP5 2WH (GB)
(74) Representative: Roberts, Simon Christopher
(86) International application number: PCT/GB1999/003831
(87) International publication number: WO 2000/031930

(56) References cited:
- EP-A- 0 887 995
- US-A- 4 251 684
- US-A- 5 062 106
- US-A- 5 557 320
- US-A- 5 757 669
- CHOI D ET AL: "ISSUES IN ENTERPRISE E-MAIL MANAGEMENT" IEEE COMMUNICATIONS MAGAZINE, vol. 34, no. 4, 1 April 1996 (1996-04-01), pages 78-82, XP000586075

## Description

The present invention relates to a messaging platform suitable for use in a communications network.

Users of communications networks are now commonly offered a variety of messaging services. By contrast with conventional telephony services in which calls are established in real time, in messaging services a message, which may be in any of a number of media, is deposited at one time and read at a later time. These services may include, for example, voicemail allowing the user to record a spoken message, faxmail that similarly allows a fax to be stored for later retrieval by the addressee, or email

Choi, D et al in "Issues in Enterprise E-Mail Management" IEEE Communicatons Magazine, vol. 34, no. 4, 1 April 1996 pages 78-82, describes an e-mail network in which message transfer agents (MTAs) form a distributed backbone which routes a common e-mail protocol. A congestion avoidance algorithm is described which is arranged to control congestion of MTAs by pushing an offered load into the MTAs which are,mildly congested by reallocating the offered load to a differing queue within the MTA which may have a different priority.

According to a first aspect of the present invention, there is provided a messaging platform including: a message store arranged to receive message data and to store said message data for subsequent retrieval, wherein the messaging platform is comprising: an overload controller responsive to an overload condition in the platform and arranged, in response to the said overload condition, to limit loading of the platform; a service provider interface; a control interface allowing communication of control signals with a number of service providers, said number of service providers being connected to the messaging platform by control and data channels; an access controller connected to the overload controller, wherein both data and control channels from said number of service providers pass to the access controller; wherein the overload controller and the access controller in combination function to protect the messaging platform from overloading by signals arriving on said service provider interface by said overload controller detecting overload conditions and when an overload condition is detected by the overload controller, the overload controller configuring the access controller to deny access to the messaging platform of certain control signals.

While it is known to provide platforms for real-time telephony with overload control mechanisms, conventionally messaging platforms have been regarded as carrying out an "off-line" data storage and processing function and so have not included such overload control mechanisms. The present inventors have found however that the addition of an overload controller to a messaging platform significantly enhances the stability and scaleability of the platform, that is to say its ability to adapt to increasing numbers of users.

The term "overload condition" as used in this document encompasses conditions in which the loading of the platform is approaching a level at which the operation of the platform would be impaired, as well as conditions in which such a level has already been reached. In general the overload controller will be arranged to limit the loading of the platform in such a way that the level at which impairment occurs is not reached.

Preferably the platform further comprises c) a control interface arranged to receive control requests instructing transactions on the messaging platform, and the overload controller includes means for denying at least some of the control requests in response to the overload condition.

While at one time the messaging platforms supporting such services were operated solely under the control of the network operator, increasingly messaging services are operated by service providers other than the network operator. Accordingly it is necessary to provide the messaging platform with a control interface to allow communication of control signals with the service provider. In addition, in order to implement more advanced services which go beyond mere message deposit and retrieval, it is necessary to provide users with some access to a control interface. The present inventors have recognised that overloading of the control interfaces on a messaging platform is a critical factor in degrading the reliability of such platforms. This preferred feature of the invention, by providing an overload controller on the control interface significantly enhances the performance of the platform and makes it possible to open control interfaces to service providers or to users without compromising the stability of the platform.

Preferably the overload controller includes a store programmed with criteria for applying different classes of service to (a) the mailboxes in the mail store, (b) the service providers accessing the mail store, (c) control messages at the control interface, or any combination of these. The overload controller is arranged, in response to an overload condition on the platform or the service provider, selectively to deny access to a control message depending on a class of service assigned in accordance with the said criteria to the control message.

Preferably the messaging platform includes a plurality of mailboxes containing message data, each mailbox being switchable between an open state, in which message data may be written to or read from the mailbox, and a closed state, and the overload controller is arranged to allow requests for the closing of a mailbox and to deny requests for the opening of the mailbox.

The inventors have found that a particularly effective means of limiting the loading of the platform, while also limiting the impact on ongoing transactions, is to admit requests for closing mailboxes and to deny requests for opening mailboxes. Since requests for opening mailboxes are normally followed by a number of related transactions, denying these requests, while allowing existing transaction sequences to be terminated by the closing of a mailbox, quickly results in a reduction in the loading of the platform.

According to a second aspect of the present invention, there is provided a messaging system comprising:
a service platform running a messaging service application; and
a messaging platform in accordance with the first aspect connected to the service platform via a control interface, and arranged to receive control requests from the service platform via the control interface.

The service platform may be integrated with the messaging platform, but preferably is remote from it. Several such service platforms may communicate with a single messaging platform.

According to a third aspect of the present invention, there is provided a method of operating a messaging platform including:
storing message data on the messaging platform:
subsequently outputting message data from the platform, thereby allowing retrieval of a corresponding message,
   wherein the method is comprising:
allowing communication of control signals with a number of service providers via a control interface of said messaging platform, said number of service providers being connected to the messaging platform by control and data channels passing to an access controller connected to an overload controller of said messaging platform; and characterized by:
protecting the messaging platform from overloading by signals arriving on a service provider interface by the overload controller and the access controller functioning in combination by: the overload controller detecting an overload condition on the platform and in response to the overload condition limiting loading of the platform,
by configuring the access controller to deny access to the messaging platform of certain control signals.

Systems embodying the present invention will now be described in further detail, by way of example only, with reference to the accompanying drawings, in which;
Figure 1 is a schematic of a network incorporating a messaging platform;
Figure 2 is a schematic of a platform embodying the invention for use in the network of Figure 1;
Figures 3a to 3y are SDL diagrams showing in further detail the platform of Figure 2; and
Figure 4 is a diagram showing in further detail the platform of Figure 2.

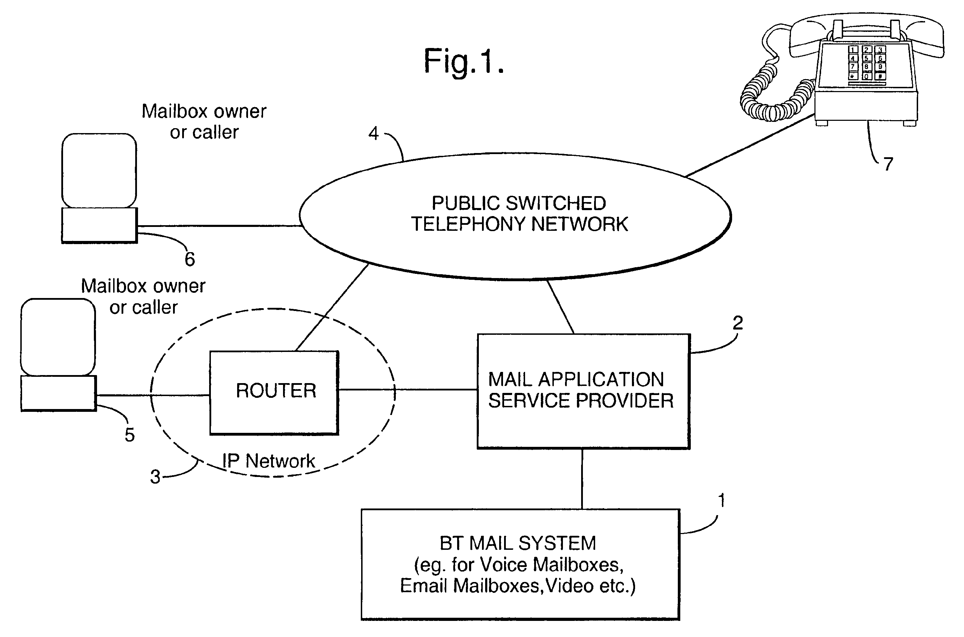

As shown in Figure 1, a communications system includes a messaging platform 1. The messaging platform 1 is connected to a service provider platform 2. The service provider platform is connected to a number of communications networks including an IP (internet protocol) network 3 and the PSTN (public switched telephone network) 4. Customer terminals 5,6,7 are connected to the service provider platform variously via the PSTN and via the IP network. The customer terminals may include for example, conventional fixed-line telephones, mobile telephones and also personal computers.

In use, customers may subscribe to a message service offered by the service provider. Then, for example, when a subscriber is not able to take a call from a calling party, the call may be diverted to the service provider platform. The service provider platform may then communicate data received from the caller, for example in the form of a recorded digitised voice message, to the messaging platform.

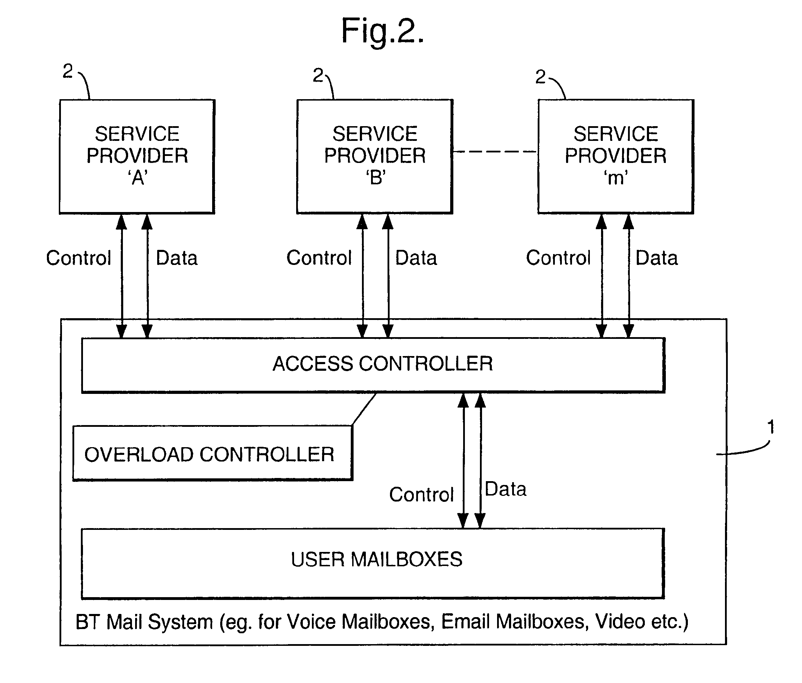

Figure 2 shows in further detail the messaging platform. This may be implemented, for example, using the BT CallMinder platform (described in [British Telecom Engineering Vol 15 Part 2 July 1996]), which is based on the Speech Applications Platform (described in [British Telecom Engineering Vol 13 Part 4 January 1995]). The CallMinder platform is an integrated platform implementing both a service application platform and the messaging platform. Alternatively a distributed architecture may be used in which a number of service provider platforms communicate with a message platform over a network. In this case, a suitable architecture is that described in Messaging APIs for Voice Networks, RM Claxton, Sixth IEE Conference on Telecommunications (no. 451) 1998.

As shown in Figure 2, a number of service providers, A,B,....m are connected to the messaging platform by control and data channels. As noted in the introduction above, some end users may themselves be given access to the control interface of the messaging platform, and the term "service provider" is used here broadly to encompass any party accessing the control interface, including such end users. The control channels are used for registration commands, for example to set event detection triggers on the platform to generate a notification whenever a message is left for a specified subscriber, and for action commands, for example to carry out actions such as replaying a message, saving a message or deleting a message. Both data and control channels from the service providers pass in the first instance to an access controller. The access controller is connected to an overload controller. The overload controller and access controller in combination function to protect the platform from overloading by signals arriving on the service provider interface. The overload controller detects overload conditions, for example by monitoring the rate of transactions between the access controller and service providers or alternatively by monitoring the processor utilisation of the mail store processors. When an overload condition is detected by the overload controller then the overload controller configures the access controller to deny access to the platform to certain signals (for example, requests to open a low priority mailbox in the mail store). Different types of signals are assigned different priorities. Three alternative schemes are described below by way of example.

### Scheme 1

In this scheme, different service classes are applied to different service providers. During overload conditions, as monitored by a load controller, those subscribing to a higher priority class of service level agreement are given priority over those requests coming from a Service Provider with a lower priority class. Hence, actions pertaining to the particular mailboxes used by customers of the higher priority class of service would receive preferential treatment. It is envisaged that a range of service classes will be defined, which will correspond to the overload mechanism achieving a specified quality of service for those classes. Examples of service classes are given in Table 1 below.

| ***Service Class*** | ***Description*** |
|---|---|
| III | Guaranteed end user access 99.99% of the time |
| | Guaranteed Service Provider notifications within 30 seconds, 99.99% of the time |
| II | Guaranteed end user access 98.0 % of the time |
| | Guaranteed Service Provider notifications within 30 seconds, 90.0% of the time |
| | Guaranteed Service Provider notifications within 20 minutes, 99.99% of the time |
| I | No guaranteed end user access |
| | No guaranteed Service Provider notifications |

### Scheme 2

As in scheme 1 different service classes are used. In this case the different service classes are applied to individual mailboxes for particular subscribers. Mailbox subscribers subscribing to higher service level classes are given priority over requests for action associated with individual mailbox users with a lower priority class.

### Scheme 3

In this scheme, different priorities are applied to certain types of transaction across the service provider interface. For example, the ability to deposit a message from a caller into a mailbox could take priority over a change of profile request from the user depending upon the load conditions prevailing.

As a further alternative, elements of two or more of these schemes may be combined, so that the priority given to a certain signal at the service provider interface may depend upon a weighted combination of the service provider class, the subscriber class and the signalling type priority.

A service provider application which itself becomes overloaded may also request that the mail system imposes an overload control scheme (such as those described above) to protect that application from overload.

In operation, which ever scheme is used, the overload controller monitors an appropriate one or more loading parameters. In the present example this parameter is the rate of transactions between the service provider applications and the mailboxes which pass through the access controller. This mechanism provides a measure of mail system processing usage. Other examples of measuring processing load may be based on directly measuring the load on the platform Central Processor Units and other hardware devices (this information is usually available from operating systems). Alternatively, other load measures, such as the amount of storage utilised (disk and memory) can be measured. Again this information is provided by most operating systems (e.g. Windows 95 and UNIX both provide system information). Threshold levels for system loading are defined for the mail system. The thresholds are defined such that a defined quality of service can be met for particular service classes (seeTable 1), and are dependent upon the platform and Mail system being used, and the customer/service mix for the particular implementation. As these threshold levels are reached, the overload control management imposes overload control. The following controls can be imposed:
- refusing new requests by Service Providers to open low priority mailboxes,
- closing Service Provider access to low priority open mailboxes,
- refusing end user access to low priority mailboxes,
- queuing control messages and data transfers on the next highest priority open mailboxes.

If the next load threshold level is reached, the same overload controls will be imposed on the next highest priority mailboxes. If instead, the system load reduces, the overload controls set at that level are removed in reverse order to that in which they were applied.

In addition to responding to overload conditions within the platform, the overload controller may also be programmed to recognise and respond to signals from a service platform indicating that that platform is overloaded. The overload controller might then, for example, inhibit the transmission of notifications from the messaging platform to the overloaded service platform.

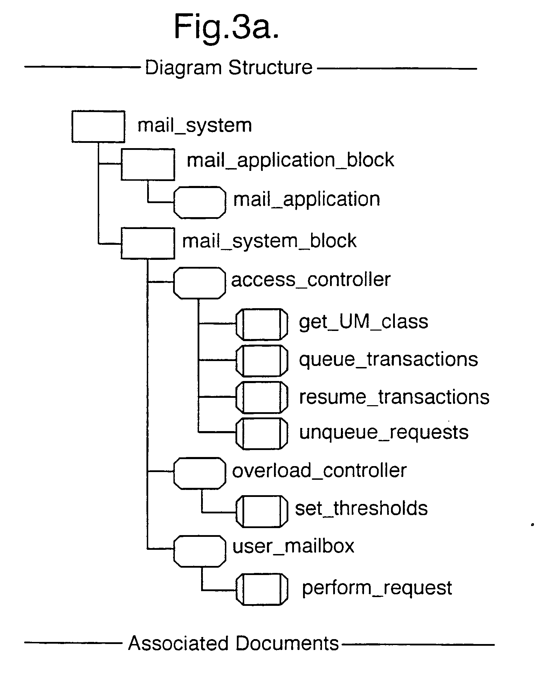

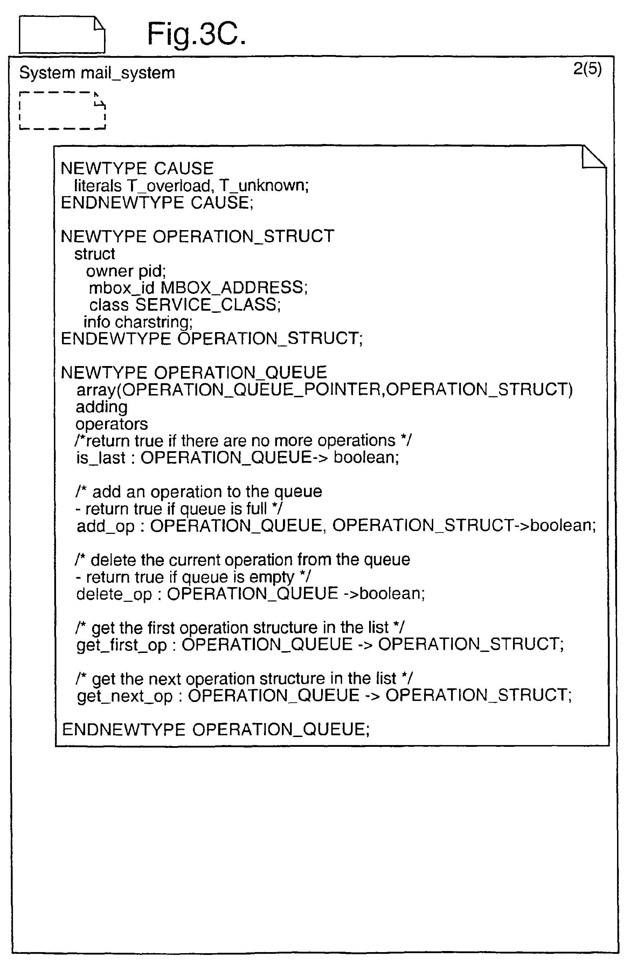

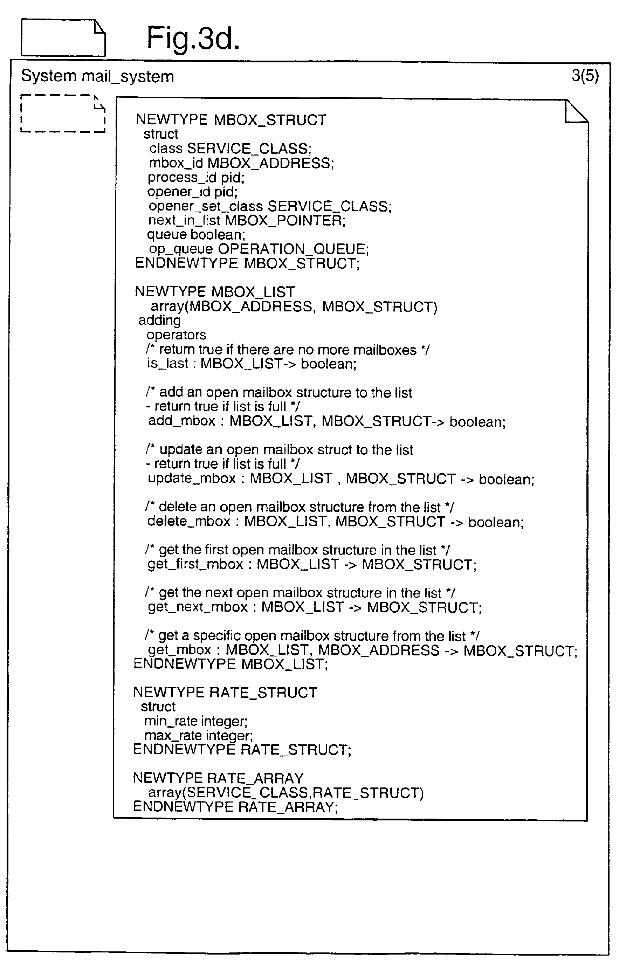

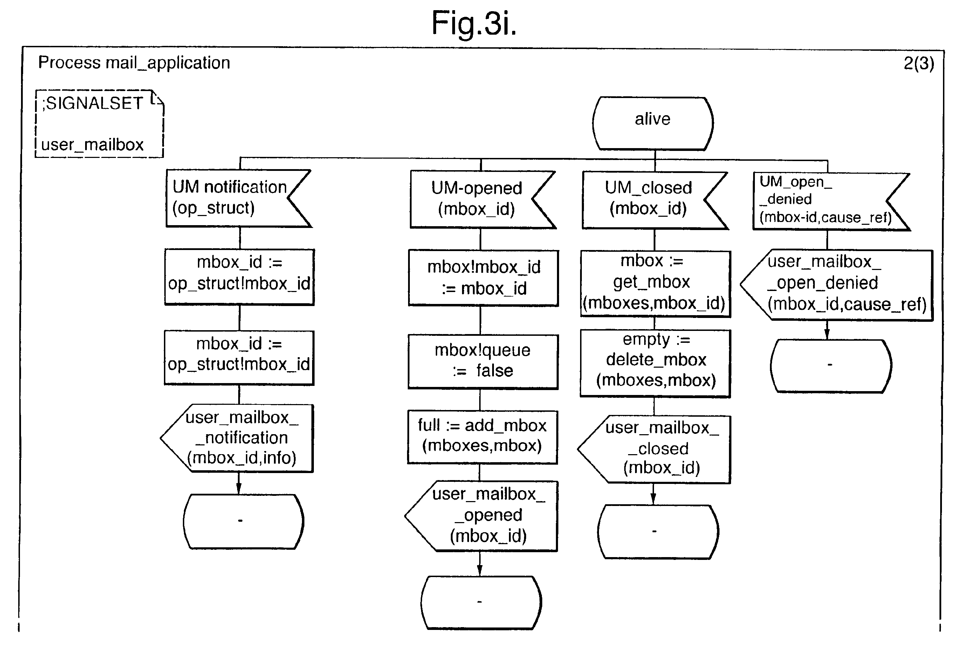

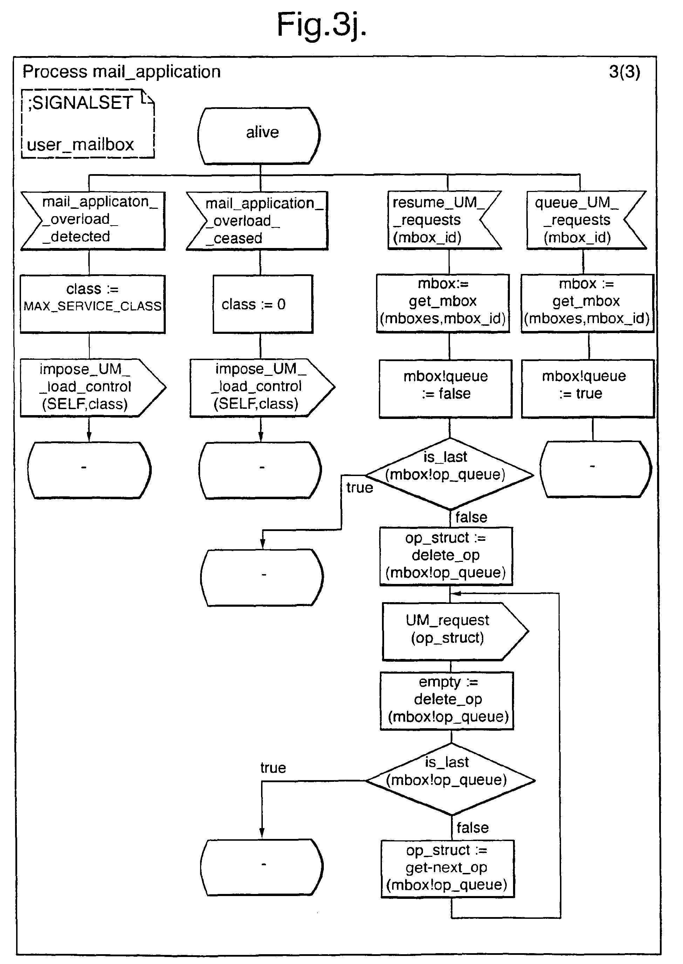

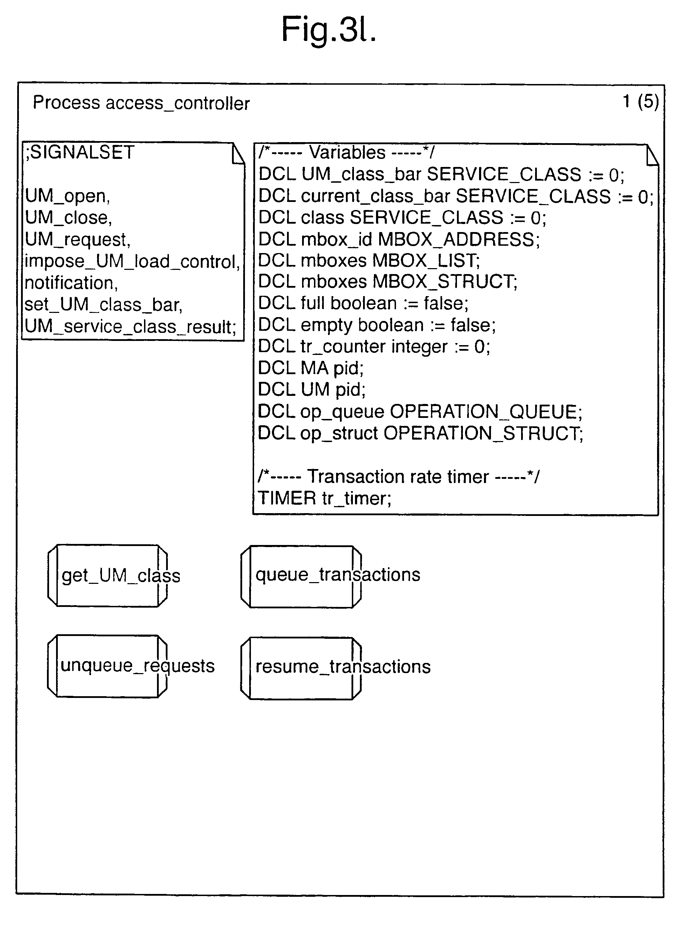

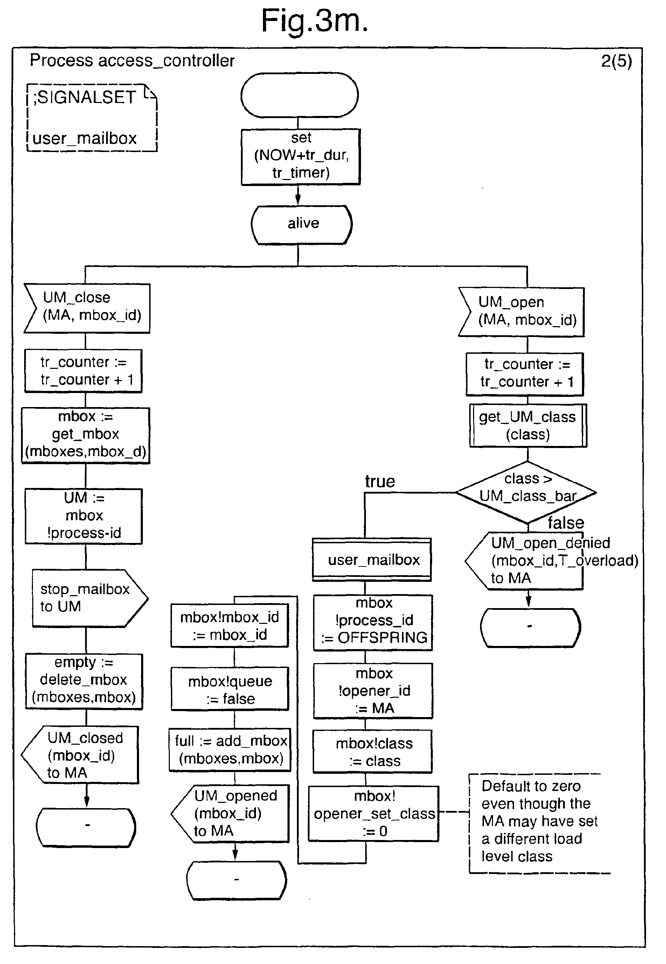

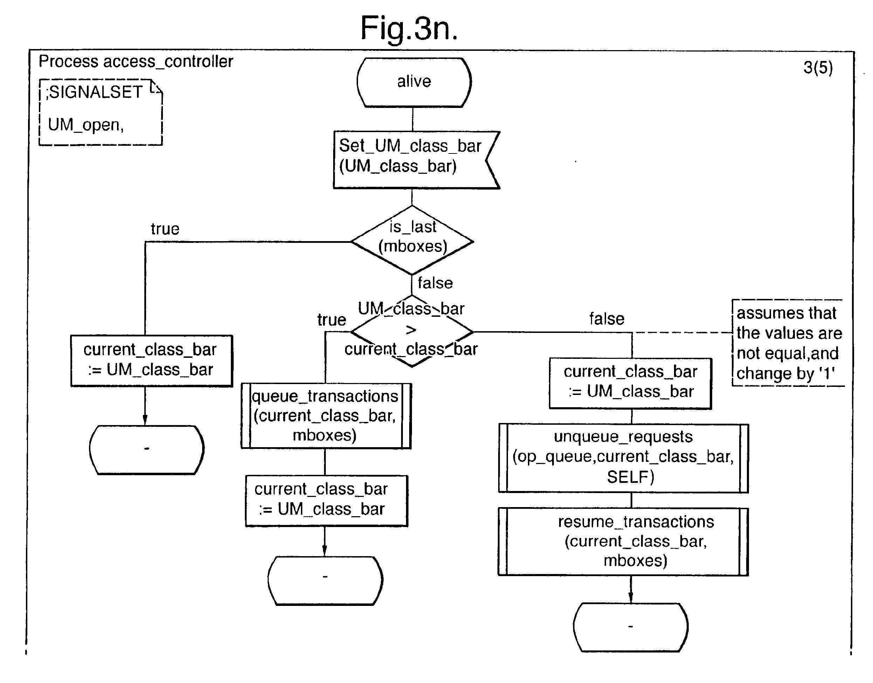

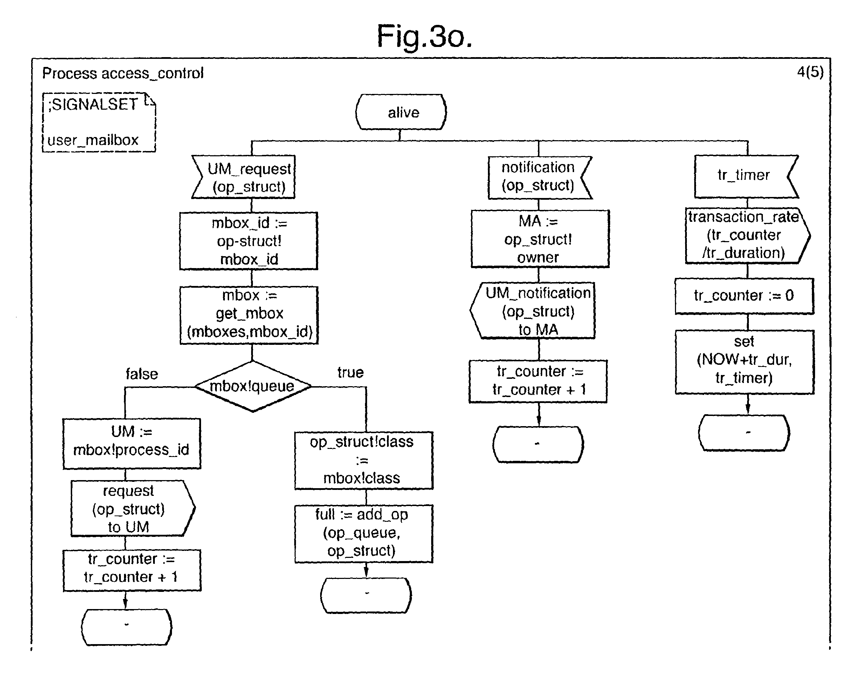

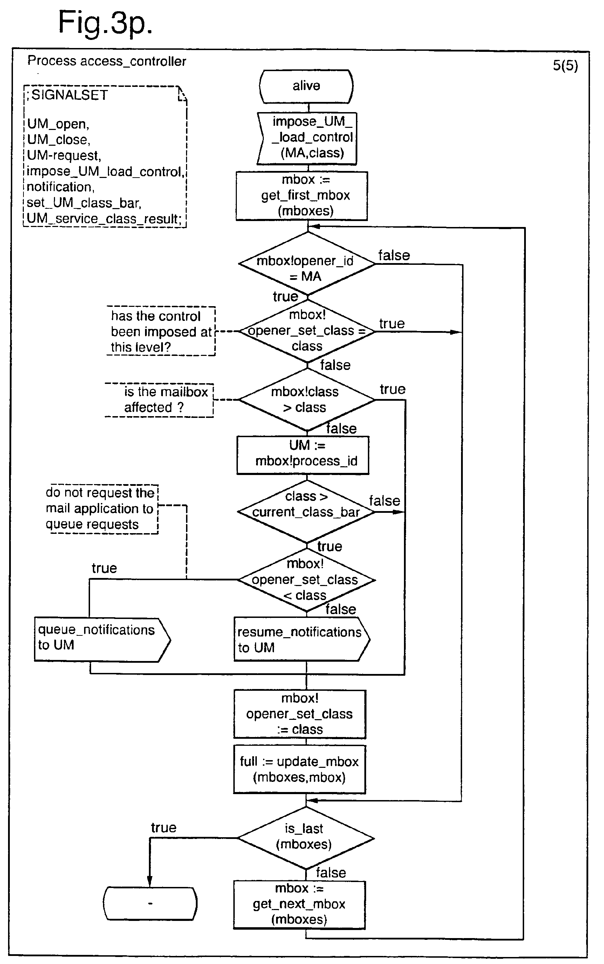

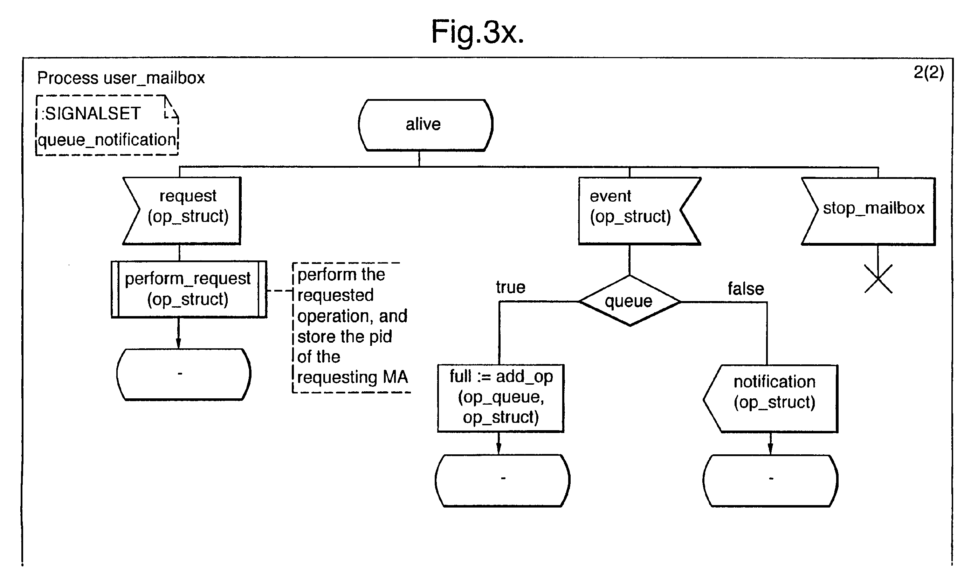

Figures 3a to 3y are SDL (Specification and Description Language [ITU-T Z.100]) diagrams showing in further detail the implementation of the messaging platform, including the overload controller. The structures shown may be compiled using commercially available software tools to provide code for running on the processors of the messaging platform. A description of the SDL diagrams follows:

### Figure 3a: Diagram Structure

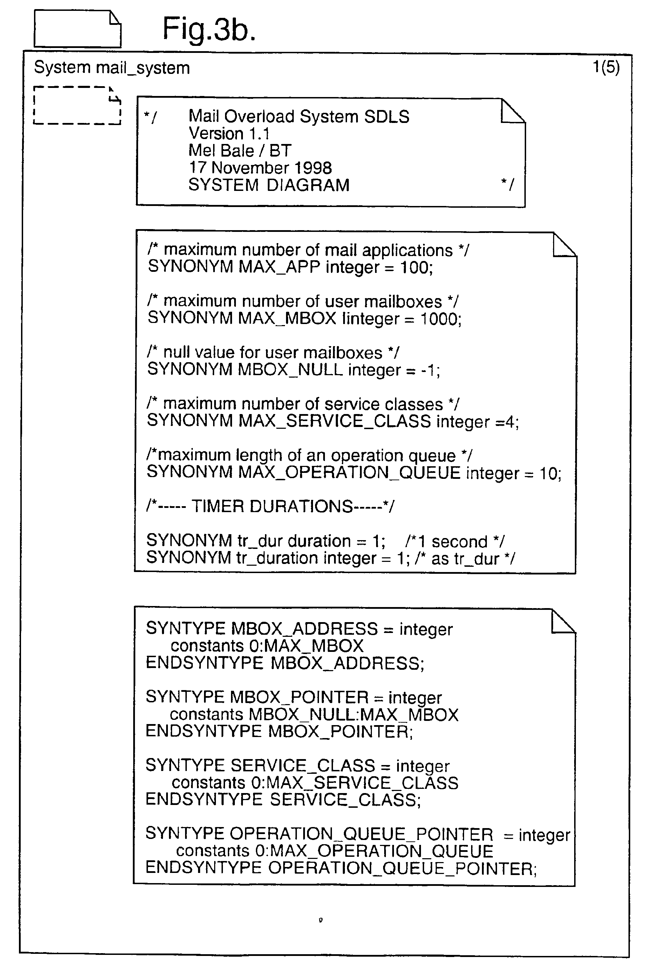

Describes the structure of the following figures 3b to 3y.

### Figures 3b-3d: System mail_system 1-3

Defines the static limits of the described mail system, and type definitions and operators for variables used.

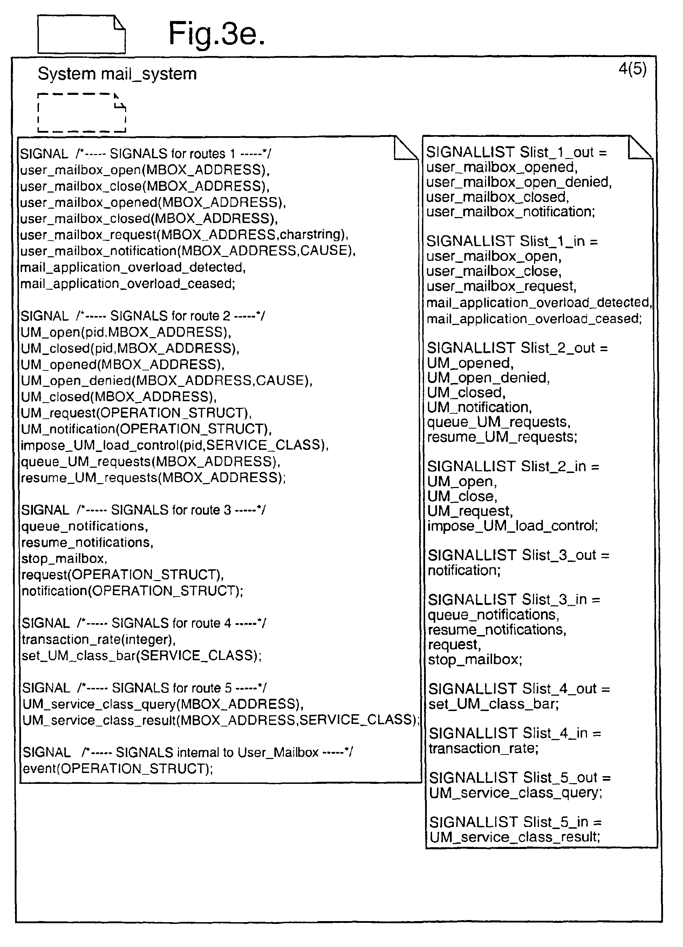

### Figure 3e: System mail_system 4

Defines all of the control signals used in the mail system.

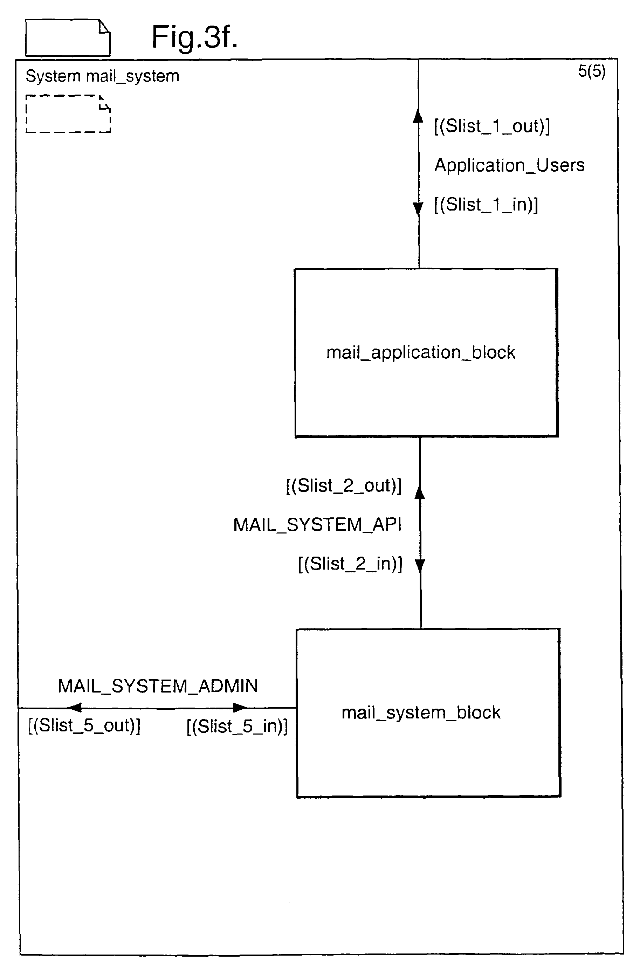

### Figure 3f: System mail_system 5

Defines the two main blocks of the system: the mail application block (i.e. the service provider platform) and the mail system block (i.e. the messaging platform). The interfaces between the blocks (the mail system API), and to/from the external environment are also defined.

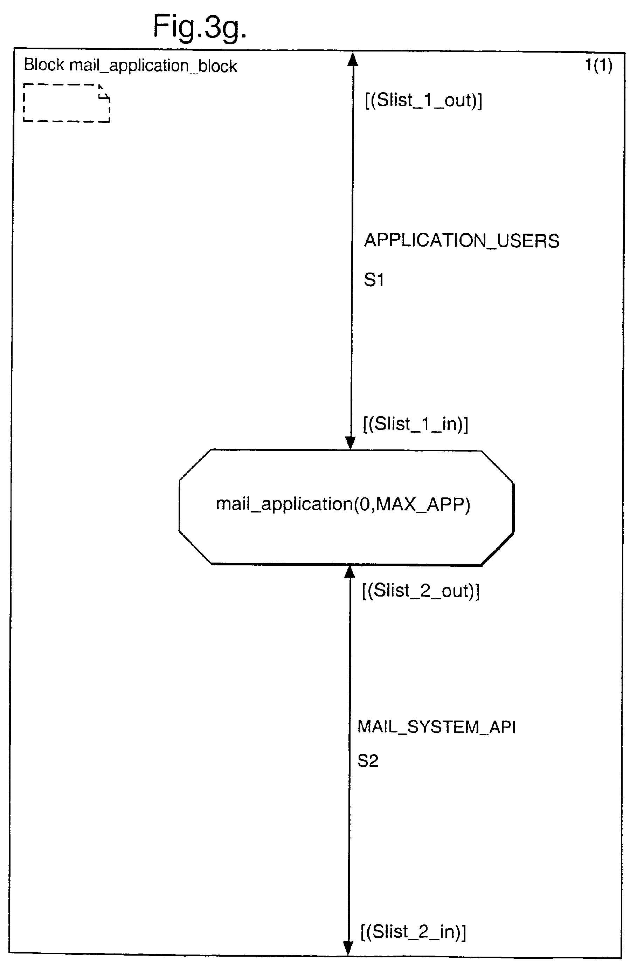

### Figure 3g: Block mail_application_block 1

Defines the processes and interfaces within the mail application block. In this case, only the mail application processes are defined.

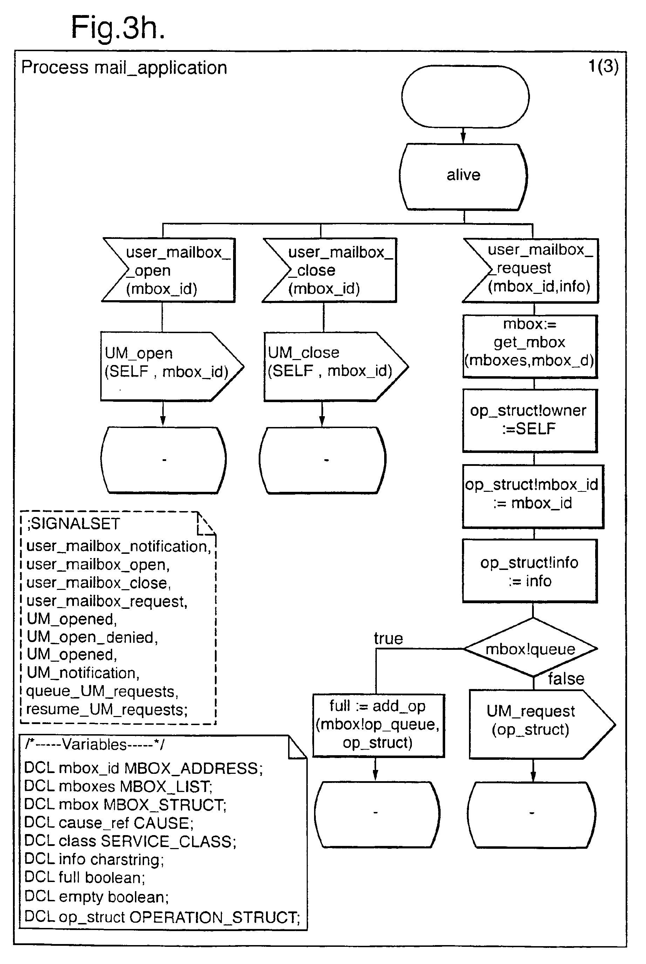

### Figure 3h-3j: Process mail_application 1-3

Defines all of the control signals, variables, states, states transitions and actions of the mail application necessary to illustrate the present invention. The process contains one state ('alive'), and acts on a number of events as follows:
***user_mailbox_open:*** A request from a user (or some other stimulus) to open a mailbox results in a request to the access controller to open a mailbox.
***user_mailbox_close:*** A request from a user (or some other stimulus) to close a mailbox results in a request to the access controller to close a mailbox.
***user_mailbox_request:*** A request from a user (or some other stimulus) to perform an action on an open mailbox usually results in a request to the access controller to perform an action on an open mailbox. If however, the mail system is overloaded, then the request will be queued.
***mail_ application_overload_detected:*** An indication from the service provider platform (or some other stimulus) that the mail application is overloaded results in a request to the access controller to impose overload controls on open mailboxes opened by that application that are below a specified service class. Requests to these mailboxes are not queued.
***mail_application_overload_ceased:*** An indication from the service provider platform (or some other stimulus) that the mail application overload has ceased results in a request to the access controller to remove overload controls on open mailboxes opened by that application that are above a specified service class.
***UM_opened:*** Confirms that a mailbox has been opened.
***UM_closed:*** Confirms that a mailbox has been closed.
***UM_open_denied:*** Indicates that a request to open a mailbox has been denied - for example because overload controls have been imposed.
***UM_notification:*** Indicates a notification from a mailbox, which is passed back to the application user (if appropriate). The notification could be the result of an earlier mail application request on the mailbox, or another (e.g. timer) event.
***queue_UM_reguests:*** Indicates that the access controller has imposed overload controls on a mailbox, and that the mail application should not make further requests on that mailbox. The mail application will queue subsequent requests.
***resume_UM_requests:*** Indicates that the access controller has removed overload controls on a mailbox, and that the mail application can make further requests on that mailbox. Any pending requests in the queue will be immediately sent to the mail system.

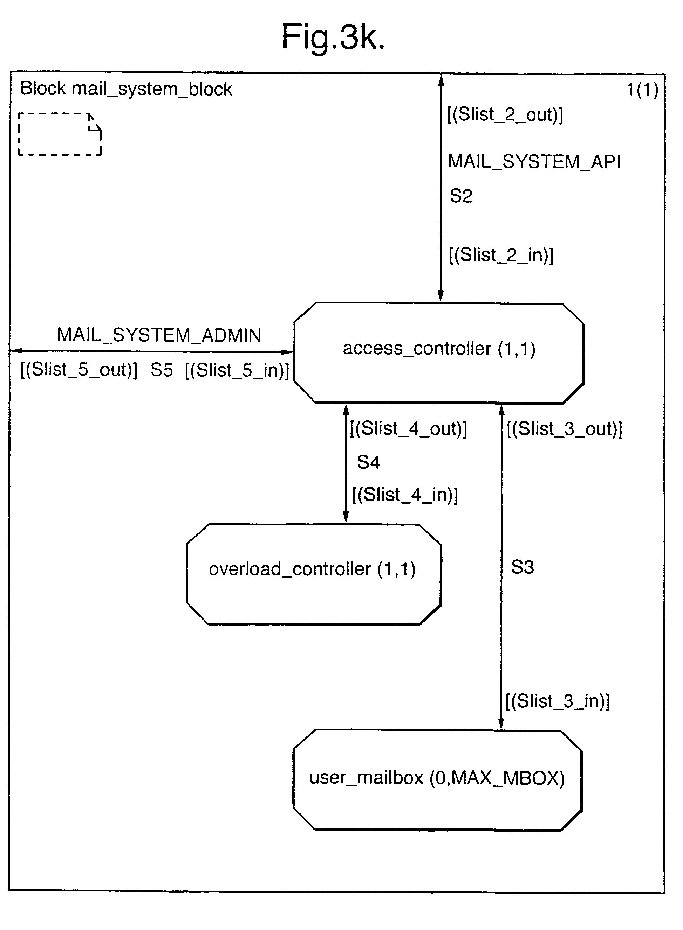

### Figure 3k: Block mail_system_block 1

Defines the processes and interfaces within the mail system block. In this case, there are three processes: the single access controller, the single overload controller, and the multiple user mailboxes.

### Figure 31-3p: Process access controller 1-5

Defines all of the control signals, variables, procedures, states, states transitions and actions of the access controller necessary to illustrate the present invention. The process contains one state ('alive') that is entered after the 'tr_timer' has been set. The process acts on a number of events as follows:
***UM_open:*** A request from a mail application to open a mailbox is received. The transaction counter is incremented. If the mailbox has a higher priority ('class') than that set by the overload control mechanism, the mailbox is opened (by creating a user mailbox process), the identity of the mailbox is added to the linked list of open mailboxes, and the actions are confirmed to the mail application. Otherwise, the mail application is informed that the request is denied.
***UM_close:*** A request from a mail application to close a mailbox is received. The transaction counter is incremented. The mailbox is closed - by terminating the user mailbox process, the identity of the mailbox is removed from the linked list of open mailboxes, and the actions are confirmed to the mail application.
***UM_request:*** A request from a mail application to perform an operation on an open mailbox is received. The transaction counter is incremented. If the overload control is not applied to that mailbox, then the request is passed onto the mailbox. Otherwise, the request is placed in an request queue.
***set_UM_class_bar:*** A request from the overload controller to set the priority level ('class') at which mailboxes may be opened or controlled is received. If the priority level is higher than the current priority level (the 'current_class_bar'), then mail applications with open mailboxes below the priority level are requested to queue further requests to that mailbox (procedure 'queue_transactions'), the current priority level is raised to the new level. If the priority level is lower than the current priority level (the 'current_class_bar'), then any queued requests received from mail applications are unqueued (procedure 'unqueue_requests'). Following this, mail applications with open mailboxes above the priority level are requested to resume further requests to that mailbox (procedure 'resume_transactions'), and the current priority level is lowered to the new level.
***notification:*** A notification from an open mailbox is received. The transaction counter is incremented, and the notification is passed on to the relevant mail application.
***impose_UM_load_control:*** A request from a mail application to impose load control on open mailboxes that were opened by the application is received. Mailboxes with a class less than or equal to the specified level are requested to queue up notifications, if not already doing so. Mailboxes with a class greater than the specified level are requested to resume notifications, if not already asked to do so. This mechanism does not override any controls imposed by the overload controller. ***tr_timer:*** A transaction timer expiry event is received. The transaction timer is set to expire every second. The current transaction rate is thus the value of the transaction counter, per second. This overload controller is informed of the current transaction rate, the transaction counter is reset to zero and the tr_timer reset.

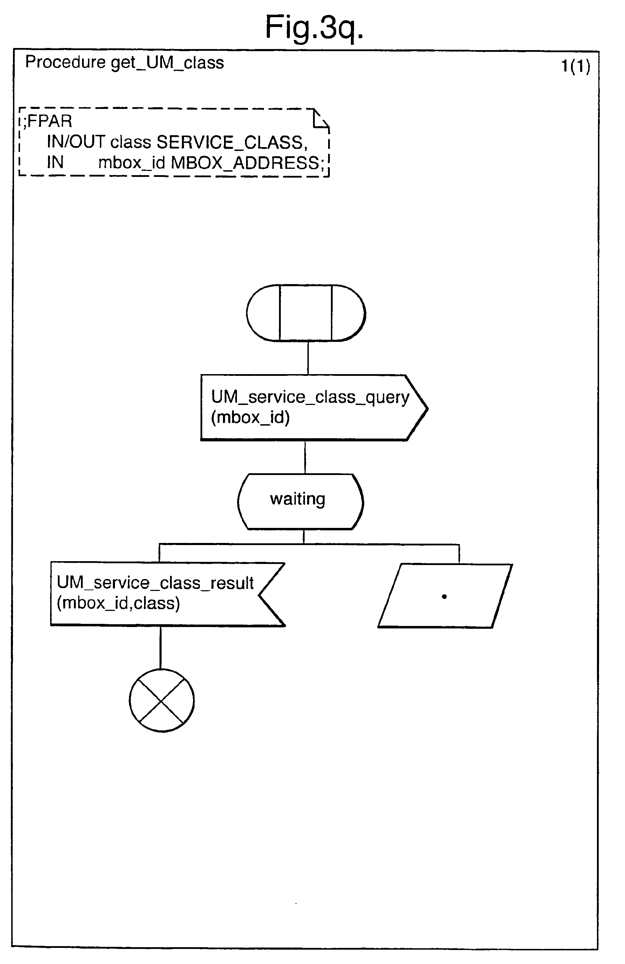

### Figure 3q: Procedure get_UM_class 1

Defines the procedure for retrieving the provisioned service class of a mailbox from the management system for the mail system.

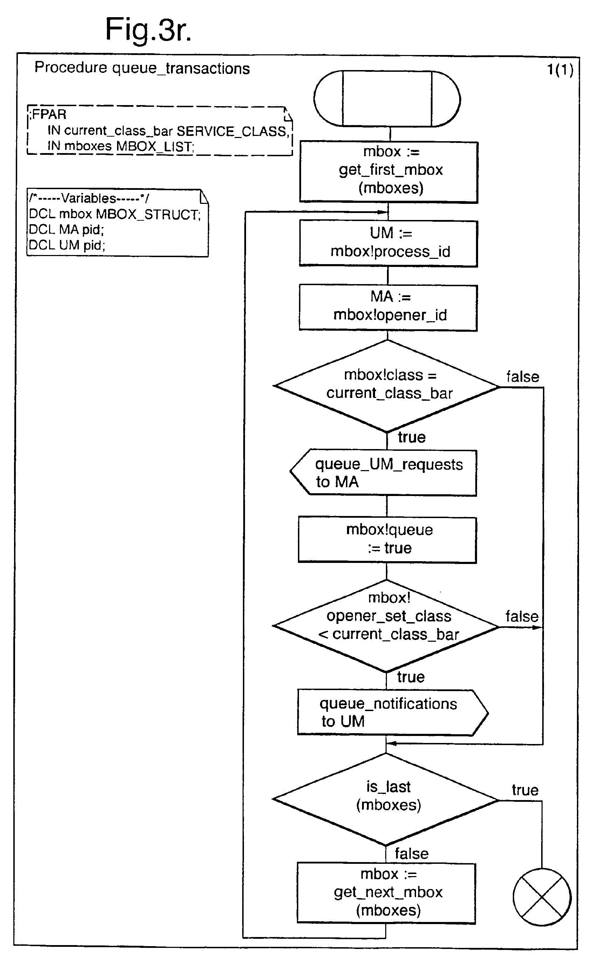

### Figure 3r: Procedure queue transactions 1

Defines the procedure for informing the mail application to queue requests to open mailboxes, and informing the mailbox to queue notifications, when overload controls are imposed.

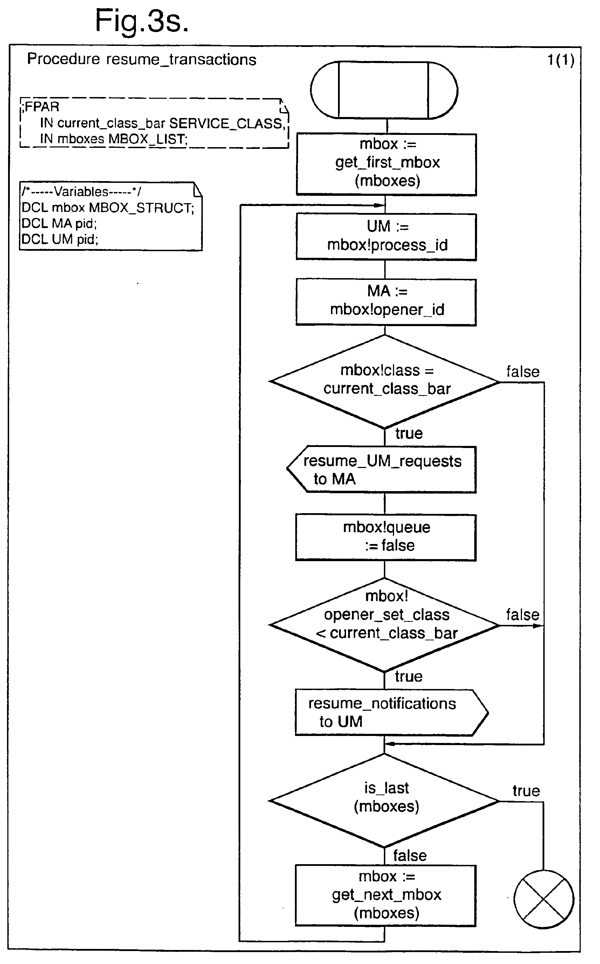

### Figure 3s: Procedure resume_transactions 1

Defines the procedure for informing the mail application to queue requests to open mailboxes, and informing the mailbox to queue notifications, when overload controls are imposed.

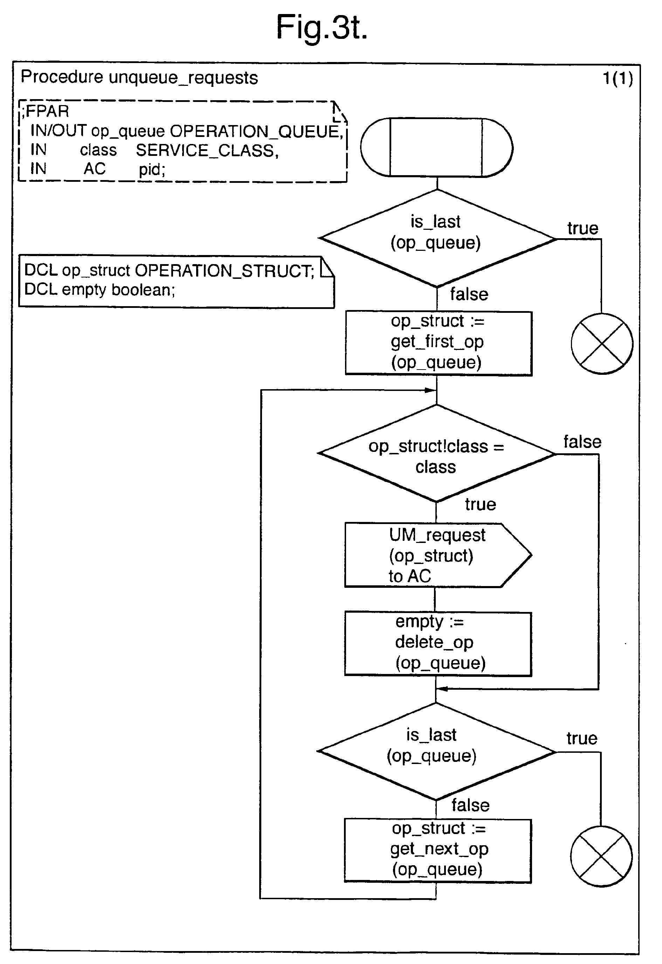

### Figure 3t: Procedure unqueue_requests 1

Defines the procedure for unqueueing requests for operations on mailboxes when overload controls have been removed.

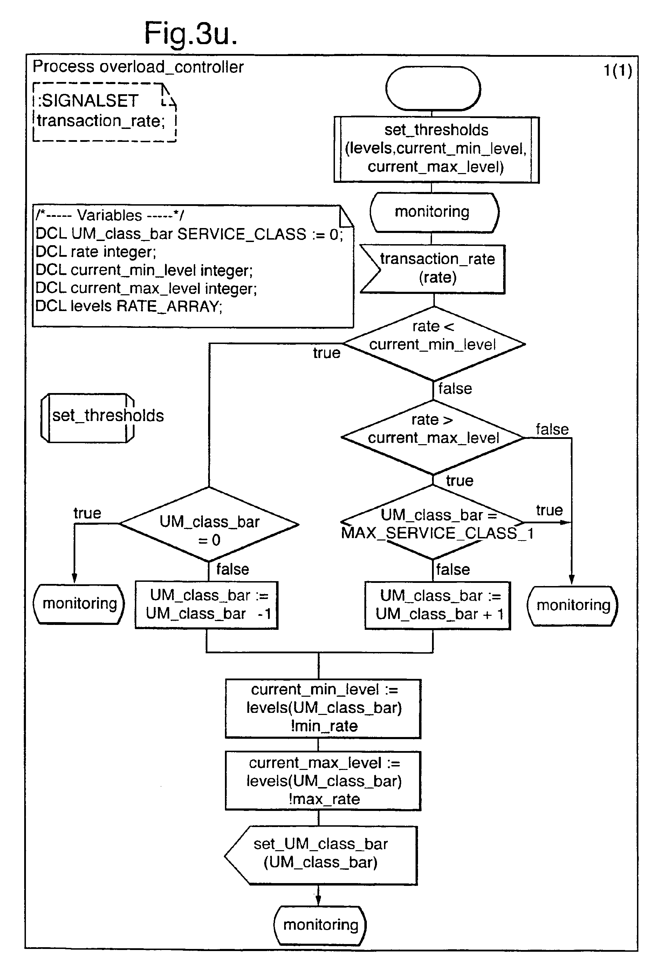

### Figure 3u: Process overload_controller 1

Defines all of the control signals, variables, procedures, states, states transitions and actions of the overload controller necessary to illustrate the present invention. The process contains one state ('monitoring') that is entered after the threshold levels for the overload controls have been set in the threshold levels table. The process acts on a number of events as follows:
***transaction_rate:*** An indication of the current transaction rate at the access controller is received. If this rate has fallen below the current minimum level, then the current overload priority ('UM_class_bar') is decremented (if it is not already at the lowest level). The threshold levels are then adjusted accordingly - from the threshold table, and the access control is requested to reduce or remove the overload control. If, alternatively, the rate has risen above the current maximum level, then the current overload priority ('UM_class_bar') is incremented (if it is not already at the highest level). The threshold levels are then adjusted accordingly and the access control is requested to increase the level of overload control.

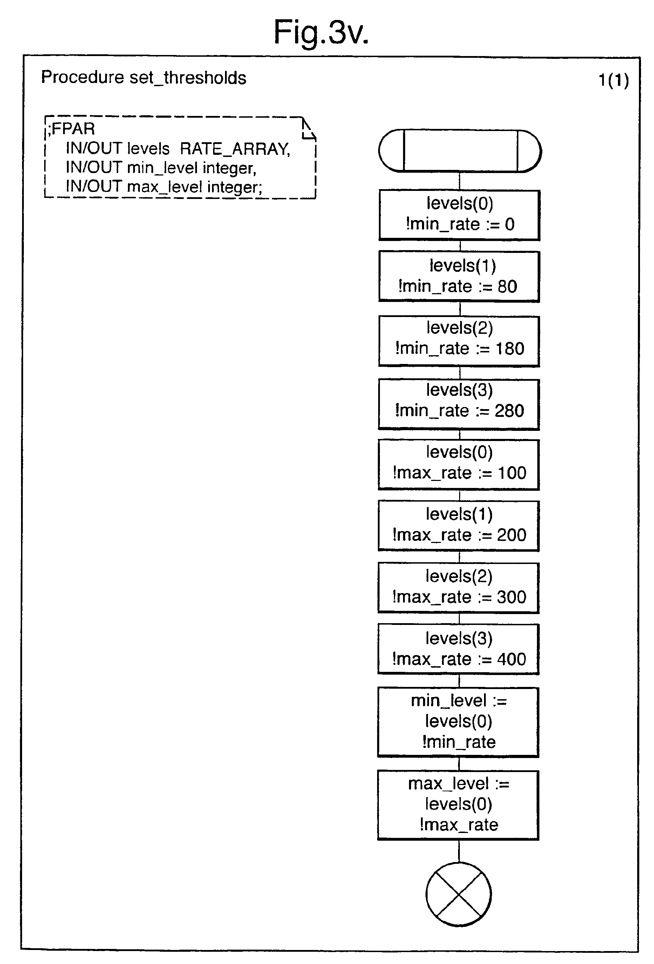

### Figure 3v: Procedure set_thresholds 1

Defines the procedure for setting the threshold levels in the overload control threshold table. These levels define the points at which the oveload controls will be imposed or removed.

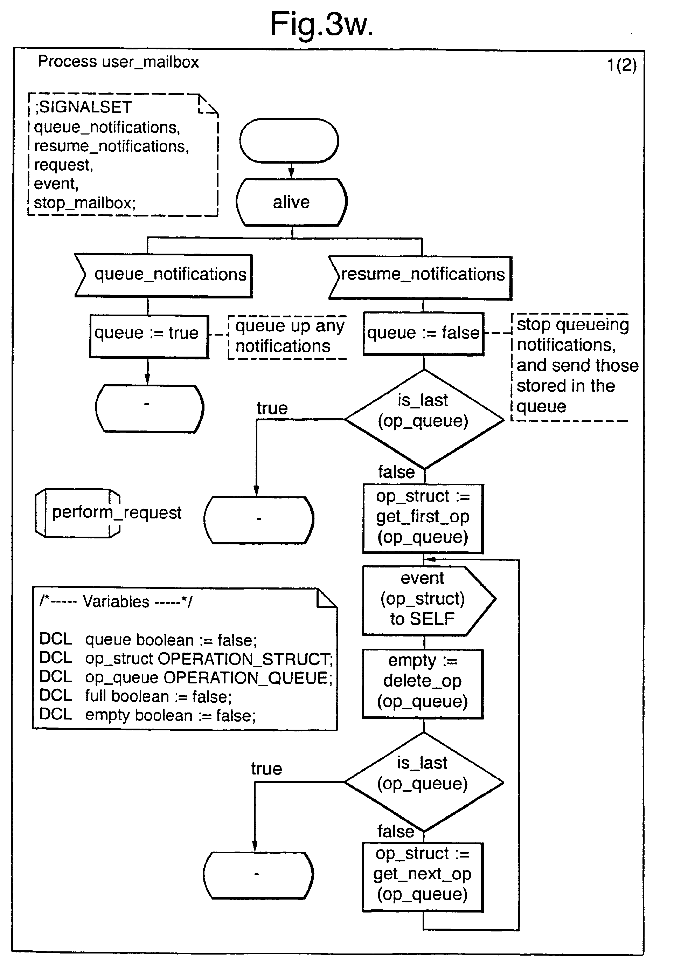

### Figure 3w-3x: Process user_mailbox 1-2

Defines all of the control signals, variables, procedures, states, states transitions and actions of the user mailbox necessary to illustrate the present invention. The process contains one state ('alive'), and acts on a number of events as follows:
***queue_ notifications:*** An request to queue notifications is received from the access controller. A flag is set indicate that future notifications should be queued.
***resume_notifications:*** An request to resume notifications is received from the access controller. A flag is cleared indicate that future notifications should no longer be queued, and any queued notifications are unqueued.
***request:*** An request to perform an operation is received from the mail application via the access controller. The operation is performed as requested (procedure 'perform_request').
***event:*** An indication that an event has occurred in the mailbox (e.g. the result of an operation or a timer expiry) is received. If overload control has been imposed, then the notification of the event to the mail application is queued. Otherwise, the notification is sent to the mail application via the access controller.
***stop_mailbox:*** An request to stop the user mailbox process is received from the access controller. The user mailbox process terminates, closing the mailbox.

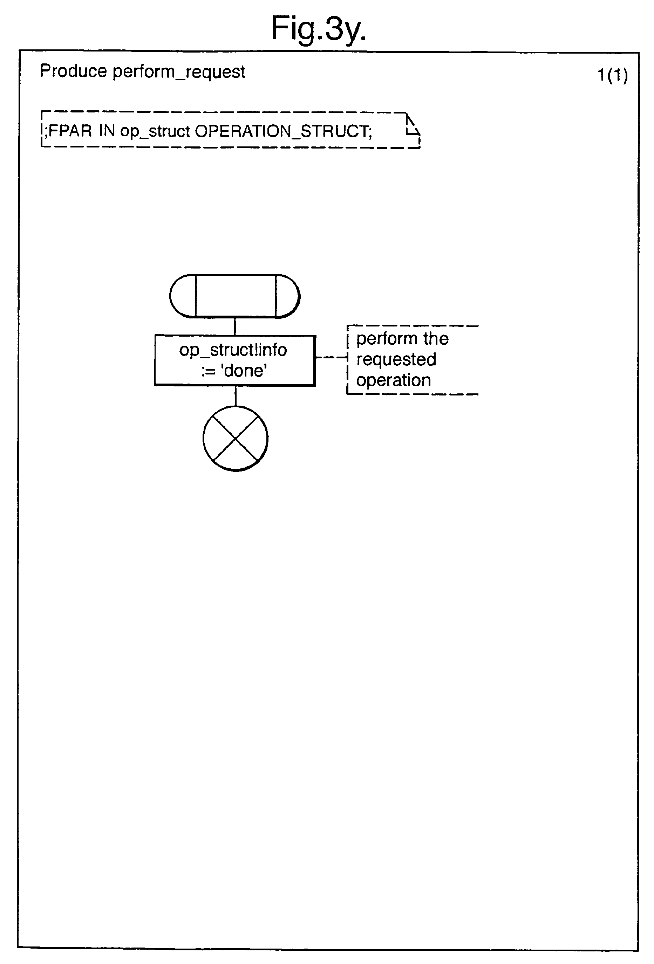

### Figure 3y: Procedure perform request 1

Defines the procedure for the mailbox to perform an operation requested by the mail application.

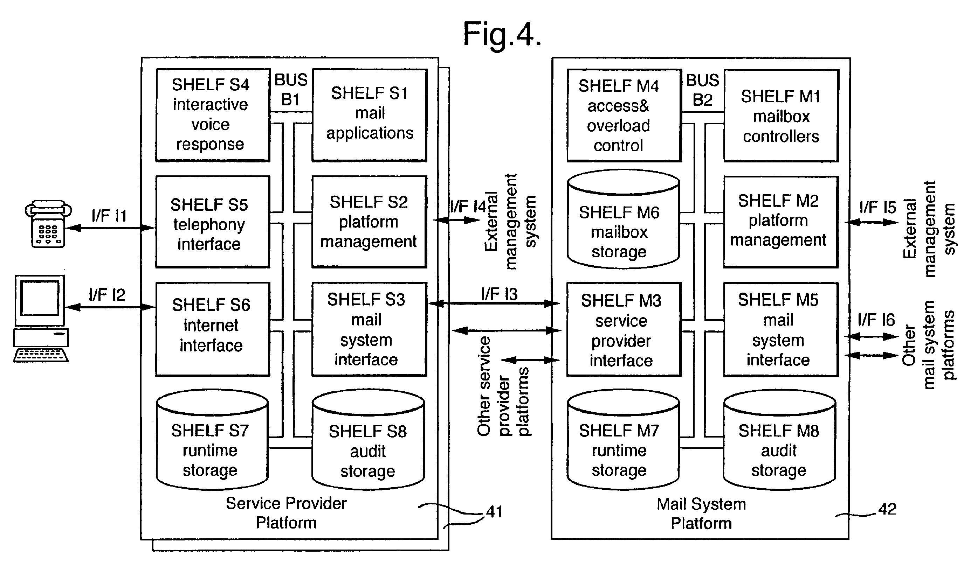

Figure 4 illustrates an example of hardware systems used to implement the present invention. It will be understood that the components and architecture shown here are given by way of example only, and many alternative components and architectures may be used equivalently. For example, rather than using platforms built from rack-mounted processors and storage devices, some or all of the platforms might be implemented on computer workstations. Such workstations may be joined together by a network to provide a distributed computing system. As a further example of the alternatives available, storage devices are by no means limited to conventional hard disks, but might alternatively or in addition use magneto-optical or optical storage media. Also, as previously stated, one or more of the "service platforms" may be embodied in a customer terminal that exercises a control function, for example in a personal computer, or in a so-called internet appliance such as a television set-top box arranged to provide Internet access, or in an intelligent telephone that provides the necessary control capabilities.

In Figure 4, end users connect to the Service Provider platform by telephone or computer. One or more Service Provider platforms are connected to the Mail Store platform. The Service Provider platform runs the mail applications (for example to collect messages, and permit retrieval of messages), interfaces to the end users, and sends control and data signals to the Mail Store platform to store and retrieve messages held in electronic format.

It is possible that the Service Provider platform and Mail Store Platform reside on the same computing node. In this case the buses B1 and B2 can be joined directly, therefore removing the need for interface 13, the Mail Store interface shelf (S3) and the Service Provider interface shelf (M3). Alternatively the platforms may be connected to each other via a network, for example the Internet, an ATM network, or a local area network LAN.

A description of the system follows:

### Interfaces

Interface I1: This is a standard telephony interface, which allows end users to record or retrieve voice messages. The interface will usually be provided via a telephony network.

Interface I2: This is an electronic data interface to a computer (e.g. TCP/IP), which allows end users to record or retrieve voice or electronic messages. The interface will usually be provided via a data network such as the internet.

Interface I3: This is an electronic data interface which transports the control and data signals between the Service Provider and Mail Store platforms. This is typically implemented as an ethernet, frame-relay or X.25 data link, running the TCP/IP protocol. Control and Data messages may be carried using suitable protocols, such as the Internet File Transfer Protocol (FTP).

Interface I4: This is an electronic data interface to the Service Provider platform management system (for example, a customer management system or simply a computer terminal). The protocol used with this interface will typically be the internet Simple Network Management Protocol (SNMP) running over TCP/IP.

Interface I5: This is an electronic data interface to the Mail Store platform management system (for example, a network management system or simply a computer terminal). The protocol used with this interface will typically be the internet Simple Network Management Protocol (SNMP) running over TCP/IP.

Interface I6: This is an electronic data interface which transports the control and data signals between the Mail Store platforms. This allows the Mail System to be distributed across a number of sites (e.g. for resilience and performance reasons). This is typically implemented as a frame-relay or X.25 data link, running the TCP/IP protocol. Control and Data messages may be carried using suitable protocols, such as the Internet File Transfer Protocol (FTP).

### Service Provider Platform Components

The Service Provider platform comprises a number of shelves, which are specialised to meet particular needs, and a bus (bus B1) that connects the shelves. A shelf is either a processor shelf (consisting of processor, memory, clocks, I/O devices, etc.) or a storage shelf (consisting of hard disk storage, disk controllers, etc.).

### Shelf S1: Mail Applications Processor shelf.

This runs the various applications that interface the end users and other applications to the mail system.

### Shelf S2: Platform Management Processor shelf.

This runs the necessary management applications for the service provider platform, and interfaces to an external management system via 14.

### Shelf S3: Mail System Interface Processor shelf.

This provides the physical termination of the interface (13) to the Mail System platform, and runs the software to interface the protocols to the rest of the Service Provider platform.

### Shelf S4: Interactive Voice Response Processor shelf.

This runs the software that interacts directly with end uses, usually over the telephony interface (I1) via the Telephony Interface processor shelf (although it can be used to interact with users over the internet interface). This shelf is able to play announcements to end users, and record voice messages into electronic format (e.g. PC '.wav' format), that will ultimately be stored in the Mail System.

### Shelf S5: Telephony Processor shelf.

This provides the physical termination of the interface (11) to the telephony network, and runs the software to interface the protocols and bearer circuits to the rest of the Service Provider platform.

### Shelf S6: Internet Processor shelf.

This provides the physical termination of the interface (12) to the internet network, and runs the software to interface the control and data protocols to the rest of the Service Provider platform.

### Shelf S7: Runtime Data Storage shelf.

Provides hard disk storage for the various processor shelves to use at run time.

### Shelf S8: Audit Data Storage shelf.

Provides resilient hard disk storage for system data that needs to be held for logging and auditing purposes. This is usually stored by the processor shelves, and retrieved by the external management system via the Platform Management processor shelf (S2).

### Mail Store Platform Components

The Mail Store platform comprises a number of shelves, which are specialised to meet particular needs, and a bus (bus B2) that connects the shelves. A shelf is either a processor shelf (consisting of processor, memory, clocks, I/O devices, etc) or a storage shelf (consisting of hard (disk) storage, disk controllers, etc).

### Shelf M1: Mailbox Controllers Processor shelf.

This runs the software used to store and retrieve messages and other information in user mailboxes.

### Shelf M2: Platform Management Processor shelf.

This runs the necessary management applications for the service provider platform, and interfaces to an external management system via 15.

### Shelf M3: Service Provider Interface Processor shelf.

This provides the physical termination of the interface (13) from one or more Service Provider platforms, and runs the software to interface the protocols to the rest of the Mail System platform.

### Shelf M4 Access and Overload Controller Processor shelf.

This runs the access controller and overload controller process software for the Mail System.

### Shelf M5: Mail System Interface Processor shelf.

This provides the physical termination of the interface (I6) from one or more other Mail System platforms, and runs the software to interface the protocols to the rest of the Mail System platform.

### Shelf M7: Mailbox Data Storage shelf.

Provides resilient hard disk storage for the user mailboxes. This is shelf is usually only accessed by the Mailbox Controllers shelf (M1) and the Platform Management processor shelf (M2).

### Shelf M7: Runtime Data Storage shelf.

Provides hard disk storage for the various processor shelves to use at run time.

### Shelf M8: Audit Data Storage shelf.

Provides resilient hard disk storage for system data that needs to be held for logging and auditing purposes. This is usually stored by the processor shelves, and retrieved by the external management system via the Platform Management processor shelf (M2).

## Claims

1. A messaging platform (1) including:
a message store arranged to receive message data and to store said message data for subsequent retrieval, the messaging platform comprising:
an overload controller responsive to an overload condition in the platform and arranged, in response to the said overload condition, to limit loading of the messaging platform (1);
a service provider interface;
a control interface arranged to allow communication of control signals with a number of service providers, said number of service providers being connected to the messaging platform (1) by control and data channels;
an access controller connected to the overload controller, wherein both data and control channels from said number of service providers pass to the access controller;
**characterized in that** the overload controller and the access controller in combination are arranged to protect the messaging platform (1) from overloading by signals arriving on said service provider interface by said overload controller detecting overload conditions and when an overload condition is detected by the overload controller, the overload controller is arranged to configure the access controller to deny access to the messaging platform (1) of certain control signals.

2. A messaging platform ; (1) according to claim 1, wherein said control interface is arranged to receive control requests instructing transactions on the messaging platform, and in which the overload controller includes means for denying at least some of the control requests in response to the overload condition.

3. A messaging platform (1) according to claim 1, wherein said service provider comprises an end user.

4. A messaging platform (1) according to any one of claims 1 to 3, wherein said overload controller detects the rate of transactions between the access controller and said plurality of said service providers.

5. A messaging platform (1) according to claim 2, in which the overload controller is programmed with criteria for applying different classes of service to control requests received at the control interface and the overload controller is arranged, in response to an overload condition on the platform, selectively to deny control requests depending on a class of service assigned in accordance with the said criteria to the control request.

6. A messaging platform (1) according to claim 5, in which the criteria apply a class of service selected depending on the identity of a service provider originating the said control requests.

7. A messaging platform (1) according to claim 5 or 6 in which the criteria apply a class of service selected depending on the identity of a subscriber mailbox to which the control request applies.

8. A messaging platform (1) according to any one of claims 5 to 7, in which the criteria apply different service classes depending on the transaction requested by the control request.

9. A messaging system comprising:
a service platform running a messaging service application; and
a messaging platform (1) according to any one of the preceding claims connected to the service platform via a control interface, and arranged to receive control requests from the service platform via the control interface.

10. A messaging system according to claim 9, in which the service platform is remote from the messaging platform (1).

11. A communications network including a messaging platform (1) according to any one of claims 1 to 8, or a messaging system according to claim 9 or 10.

12. A method of operating a messaging platform (1) including:
storing message data on the messaging platform (1);
subsequently outputting message data from the platform, thereby allowing retrieval of a corresponding message;
wherein the method is comprising:
allowing communication of control signals with a number of service providers via a control interface of said messaging platform (1), said number of service providers being connected to the messaging platform (1) by control and data channels passing to an access controller connected to an overload controller of said messaging platform (1); and **characterised by**:
protecting the messaging platform (1) from overloading by signals arriving on a service provider interface by the overload controller and the access controller functioning in combination by:
the overload controller detecting an overload condition on the platform; and, in response to the overload condition,
the overload controller limiting loading of the platform by configuring the access controller to deny access to the messaging platform (1) of certain control signals.

13. A method according to claim 12, further comprising:
receiving at the message platform control requests instructing a transaction on the messaging platform (1),
and in which the step of limiting loading of the platform includes denying at least some of the control requests.

14. A method according to claim 13, including applying different classes of service to the control requests, and in response to the overload condition selectively denying some only of the control requests depending on the class of service applied to the control requests.

15. A method according to claim 14, including applying different classes of service to control requests depending on the identity of an originating service provider.

16. A method according to claim 14 or 15, including applying different classes of service to control requests depending on identities of customer mailboxes to which the control requests apply.

17. A method according to claim 14, 15 or 16, including applying different classes of service to control requests depending on the transaction requested by the control request

18. A method according to claim 17, in which the messaging platform includes a plurality of mailboxes containing message data, each mailbox being switchable between an open state, in which message data may be written to or read from the mailbox, and a closed state, and in which the step of limiting loading includes allowing requests for the closing of a mailbox and denying requests for the opening of a mailbox.

## Patentansprüche

1. Nachrichtenplattform (1) mit:
einem Nachrichtenspeicher, der angeordnet ist, um Nachrichtendaten zu empfangen und die Nachrichtendaten für einen nachfolgenden Abruf zu speichern, wobei die Nachrichtenplattform folgendes umfasst:
eine Überlastungssteuerung, die auf einen Überlastungszustand in der Plattform reagiert und angeordnet ist, um in Antwort auf den Überlastungszustand die Belastung der Nachrichtenplattform (1) zu begrenzen;
eine Diensteanbieter-Schnittstelle;
eine Bedienschnittstelle, die angeordnet ist, um die Kommunikation von Steuersignalen mit einer Anzahl Diensteanbieter zu erlauben, wobei die Anzahl Diensteanbieter durch Steuer- und Datenkanäle mit der Nachrichtenplattform (1) verbunden ist;
eine mit der Überlastungssteuerung verbundene Zugriffssteuerung, wobei sowohl Daten- als auch Steuerkanäle von der Anzahl Diensteanbieter zur Zugriffssteuerung gehen;
**dadurch gekennzeichnet, dass** die Überlastungssteuerung und die Zugriffssteuerung in Kombination angeordnet sind, um die Nachrichtenplattform (1) vor Überlastung durch bei der Diensteanbieter-Schnittstelle ankommende Signale durch die Überlastungszustände erfassende Überlastungssteuerung zu schützen, und dass, wenn ein Überlastungszustand von der Überlastungssteuerung erfasst wird, die Überlastungssteuerung angeordnet ist, um die Zugriffssteuerung zu konfigurieren, den Zugang bestimmter Steuersignale zur Nachrichtenplattform (1) zu verweigern.

2. Nachrichtenplattform (1) nach Anspruch 1, wobei die Bedienschnittstelle angeordnet ist, um Steueranforderungen zu empfangen, die Vorgänge auf der Nachrichtenplattform anweisen, und bei welcher die Überlastungssteuerung Einrichtungen beinhaltet, um zumindest einige der Steueranforderungen in Antwort auf den Überlastungszustand abzuweisen.

3. Nachrichtenplattform (1) nach Anspruch 1, wobei der Diensteanbieter einen Endbenutzer umfasst.

4. Nachrichtenplattform (1) nach irgendeinem der Ansprüche 1 bis 3, wobei die Überlastungssteuerung die Rate von Vorgängen zwischen der Zugriffssteuerung und den mehreren Diensteanbietern erfasst.

5. Nachrichtenplattform (1) nach Anspruch 2, bei der die Überlastungssteuerung mit Kriterien zur Anwendung verschiedener Dienstklassen zur Steuerung von Anforderungen programmiert ist, die an der Bedienschnittstelle empfangen werden, und die Überlastungssteuerung angeordnet ist, um Steueranforderungen in Abhängigkeit von einer Dienstklasse, die der Steueranforderung nach Maßgabe der Kriterien zugewiesen wird, in Antwort auf einen Überlastungszustand auf der Plattform selektiv abzuweisen.

6. Nachrichtenplattform (1) nach Anspruch 5, bei der die Kriterien eine Dienstklasse anwenden, die in Abhängigkeit von der Identität eines Diensteanbieters, die die Steueranforderungen erzeugen, ausgewählt wird.

7. Nachrichtenplattform (1) nach Anspruch 5 oder 6, bei der die Kriterien eine Dienstklasse anwenden, die in Abhängigkeit von der Identität einer Teilnehmermailbox ausgewählt wird, auf die die Steueranforderung zutrifft.

8. Nachrichtenplattform (1) nach irgendeinem der Ansprüche 5 bis 7, bei der die Kriterien in Abhängigkeit von dem Vorgang, der von der Steueranforderung angefordert wird, verschiedene Dienstklassen anwenden.

9. Nachrichtensystem mit:
einer Dienstplattform, die eine Nachrichtendienstanwendung betreibt; und
einer Nachrichtenplattform (1) nach irgendeinem der vorhergehenden Ansprüche, die mit der Dienstplattform über eine Bedienschnittstelle verbunden und angeordnet ist, um über die Bedienschnittstelle Steueranforderungen von der Dienstplattform zu empfangen.

10. Nachrichtensystem nach Anspruch 9, wobei die Dienstplattform von der Nachrichtenplattform (1) entfernt ist.

11. Kommunikationsnetzwerk, das eine Nachrichtenplattform (1) nach irgendeinem der Ansprüche 1 bis 8 oder ein Nachrichtensystem nach Anspruch 9 oder 10 beinhaltet.

12. Verfahren zum Betreiben einer Nachrichtenplattform (1), einschließlich:
Speichern von Nachrichtendaten auf der Nachrichtenplattform (1);
anschließendes Ausgeben von Nachrichtendaten aus der Plattform, wodurch der Abruf einer entsprechenden Nachricht gestattet wird;
wobei das Verfahren folgendes umfasst:
Erlauben einer Kommunikation von Steuersignalen mit einer Anzahl Diensteanbieter über eine Bedienschnittstelle der Nachrichtenplattform (1), wobei die Anzahl Diensteanbieter mit der tenplattform (1), wobei die Anzahl Diensteanbieter mit der Nachrichtenplattform (1) durch Steuer- und Datenkanäle verbunden ist, die zu einer Zugriffssteuerung gehen, welche mit einer Überlastungssteuerung der Nachrichtenplattform (1) verbunden ist; und **gekennzeichnet durch**
Schützen der Nachrichtenplattform (1) vor Überlastung **durch** bei einer Diensteanbieter-Schnittstelle ankommende Signale **durch** die Überlastungssteuerung und die Zugriffssteuerung, die in Kombination funktionieren, indem:
die Überlastungssteuerung einen Überlastungszustand auf der Plattform erfasst;
und, in Antwort auf den Überlastungszustand,
die Überlastungssteuerung die Belastung der Plattform begrenzt, indem sie die Zugriffssteuerung konfiguriert, bestimmten Steuersignalen den Zugang zur Nachrichtenplattform (1) zu verweigern.

13. Verfahren nach Anspruch 12, weiterhin mit:
Empfangen von Steueranforderungen, die einen Vorgang auf der Nachrichtenplattform (1) anweisen, an der Nachrichtenplattform (1),
und bei dem der Schritt des Begrenzens der Belastung der Plattform die Abweisung zumindest einiger der Steueranforderungen einschließt.

14. Verfahren nach Anspruch 13, das das Anwenden verschiedener Dienstklassen auf die Steueranforderungen und, in Antwort auf den Überlastungszustand, das selektive Verweigern von nur einigen der Steueranforderungen in Abhängigkeit von der auf die Steueranforderungen angewendeten Dienstklasse einschließt.

15. Verfahren nach Anspruch 14, das das Anwenden verschiedener Dienstklassen auf Steueranforderungen in Abhängigkeit von der Identität eines erzeugenden Diensteanbieters einschließt.

16. Verfahren nach Anspruch 14 oder 15, das das Anwenden verschiedener Dienstklassen auf Steueranforderungen in Abhängigkeit von Identitäten von Kundenmailboxen, auf die die Steueranforderungen zutreffen, einschließt.

17. Verfahren nach Anspruch 14, 15 oder 16, das das Anwenden verschiedener Dienstklassen auf Steueranforderungen in Abhängigkeit von dem Vorgang, der von der Steueranforderung angefordert wird, einschließt.

18. Verfahren nach Anspruch 17, bei dem die Nachrichtenplattform mehrere Nachrichtendaten enthaltende Mailboxen einschließt, wobei jede Mailbox zwischen einem offenen Zustand, in dem Nachrichtendaten an die Mailbox geschrieben oder aus der Mailbox gelesen werden können, und einem geschlossenen Zustand, in dem der Schritt des Begrenzens der Belastung das Zulassen von Anforderungen nach dem Schließen einer Mailbox und das Verweigern von Anforderungen nach dem Öffnen einer Mailbox beinhaltet, umschaltbar ist.

## Revendications

1. Plateforme de messagerie (1) comportant :
une mémoire de messages agencé de manière à recevoir des données de messages et à stocker lesdites données de messages en vue d'une récupération subséquente, la plateforme de messagerie comprenant :
un contrôleur de surcharge sensible à un état de surcharge dans la plateforme et agencé, en réponse audit état de surcharge, de manière à limiter la charge de la plateforme de messagerie (1) ;
une interface de fournisseur de services ;
une interface de commande agencée de manière à permettre la communication de signaux de commande avec un nombre de fournisseurs de services, ledit nombre de fournisseurs de services étant connecté à la plateforme de messagerie (1) par le biais de canaux de données et de commande ;
un contrôleur d'accès connecté au contrôleur de surcharge, dans lequel les canaux de données et canaux de commande dudit nombre de fournisseurs de services transitent vers le contrôleur d'accès ;
**caractérisé en ce que** le contrôleur de surcharge et le contrôleur d'accès, en association, sont agencés de manière à protéger la plateforme de messagerie (1) contre la surcharge occasionnée par des signaux arrivant sur ladite interface de fournisseur de services, par la détection d'états de surcharge, mise en oeuvre par ledit contrôleur de surcharge, et **en ce que** lorsqu'un état de surcharge est détecté par le contrôleur de surcharge, le contrôleur de surcharge est agencé de manière à configurer le contrôleur d'accès afin qu'il refuse un accès à la plateforme de messagerie (1) de certains signaux de commande.

2. Plateforme de messagerie (1) selon la revendication 1, dans laquelle ladite interface de commande est agencée de manière à recevoir des requêtes de commande instruisant des transactions sur la plateforme de messagerie, et dans laquelle le contrôleur de surcharge comporte des moyens pour refuser au moins certaines des requêtes de commande en réponse à l'état de surcharge.

3. Plateforme de messagerie (1) selon la revendication 1, dans laquelle ledit fournisseur de services comprend un utilisateur final.

4. Plateforme de messagerie (1) selon l'une quelconque des revendications 1 à 3, dans laquelle ledit contrôleur de surcharge détecte le taux de transactions entre le contrôleur d'accès et ladite pluralité de fournisseurs de services.

5. Plateforme de messagerie (1) selon la revendication 2, dans laquelle le contrôleur de surcharge est programmé avec des critères permettant l'application de classes de service différentes à des requêtes de commande reçues au niveau de l'interface de commande, et le contrôleur de surcharge est agencé, en réponse à un état de surcharge sur la plateforme, pour refuser, de manière sélective, des requêtes de commande en fonction d'une classe de service affectée selon lesdits critères à la requête de commande.

6. Plateforme de messagerie (1) selon la revendication 5, dans laquelle les critères appliquent une classe de service choisie en fonction de l'identité d'un fournisseur de services expédiant lesdites requêtes de commande.

7. Plateforme de messagerie (1) selon la revendication 5 ou 6, dans laquelle les critères appliquent une classe de service choisie en fonction de l'identité d'une boîte aux lettres d'abonné à laquelle s'applique la requête de commande.

8. Plateforme de messagerie (1) selon l'une quelconque des revendications 5 à 7, dans laquelle les critères appliquent différentes classes de service en fonction de la transaction demandée par la requête de commande.

9. Système de messagerie comprenant :
une plateforme de service exploitant une application de service de messagerie ; et
une plateforme de messagerie (1) selon l'une quelconque des revendications précédentes, connectée à la plateforme de service par l'intermédiaire d'une interface de commande, et agencée de manière à recevoir des requêtes de commande en provenance de la plateforme de service via l'interface de commande.

10. Système de messagerie selon la revendication 9, dans lequel la plateforme de service est à distance de la plateforme de messagerie (1).

11. Réseau de communications comprenant une plateforme de messagerie (1) selon l'une quelconque des revendications 1 à 8, ou un système de messagerie selon la revendication 9 ou 10.

12. Procédé d'exploitation d'une plateforme de messagerie (1) comportant
les étapes ci-après consistant à :
stocker des données de messages sur la plateforme de messagerie (1) ;
générer ensuite en sortie des données de messages à partir de la plateforme, ce qui permet par conséquent la récupération d'un message correspondant ;
dans lequel le procédé comprend l'étape ci-dessous consistant à :
permettre la communication de signaux de commande avec un nombre de fournisseurs de services par l'intermédiaire d'une interface de commande de ladite plateforme de messagerie (1), ledit nombre de fournisseurs de services étant connecté à la plateforme de messagerie (1) par des canaux de données et de commande transitant vers un contrôleur d'accès connecté à un contrôleur de surcharge de ladite plateforme de messagerie (1), et **caractérisé par** l'étape ci-après consistant à :
protéger la plateforme de messagerie (1) contre une surcharge occasionnée par des signaux arrivant sur une interface de fournisseur de services, par le biais d'un fonctionnement conjoint du contrôleur de surcharge et du contrôleur d'accès mettant en oeuvre les étapes ci-après dans lesquelles :
le contrôleur de surcharge détecte un état de surcharge sur la plateforme ;
et en réponse à l'état de surcharge,
le contrôleur de surcharge limite la charge de la plateforme en configurant le contrôleur d'accès afin qu'il refuse un accès de certains signaux de commande à la plateforme de messagerie (1).

13. Procédé selon la revendication 12, comprenant en outre l'étape ci-après consistant à :
recevoir, au niveau de la plateforme de message, des requêtes de commande instruisant une transaction sur la plateforme de messagerie (1), et
dans lequel l'étape de limitation de la charge de la plateforme comprend l'étape consistant à refuser au moins certaines des requêtes de commande.

14. Procédé selon la revendication 13, comportant l'étape consistant à appliquer des classes de service différentes aux requêtes de commande, et, en réponse à l'état de surcharge, l'étape consistant à refuser de manière sélective seulement certaines des requêtes de commande selon la classe de service appliquée aux requêtes de commande.

15. Procédé selon la revendication 14, comportant l'étape consistant à appliquer des classes de service différentes aux requêtes de commande en fonction de l'identité d'un fournisseur de services expéditeur.

16. Procédé selon la revendication 14 ou 15, comportant l'étape consistant à appliquer des classes de service distinctes aux requêtes de commande en fonction des identités des boîtes aux lettres de clients auxquelles les requêtes de commande s'appliquent.

17. Procédé selon la revendication 14, 15 ou 16, comportant l'étape consistant à appliquer des classes de service distinctes aux requêtes de commande en fonction de la transaction demandée par la requête de commande.

18. Procédé selon la revendication 17, dans lequel la plateforme de messagerie comporte une pluralité de boîtes aux lettres contenant des données de message, chaque boîte aux lettres étant commutable entre un état ouvert, dans lequel des données de messages peuvent être écrites sur, ou lues depuis, la boîte aux lettres, et un état fermé, et dans lequel l'étape consistant à limiter la charge comprend l'étape consistant à autoriser des demandes de fermeture d'une boîte aux lettres et l'étape consistant à refuser des demandes d'ouverture d'une boîte aux lettres.
